# EUROPEAN PATENT APPLICATION

(11) **EP 4 675 693 A1**
(43) Date of publication of application: **07.01.2026**
(21) Application number: 24763678.0
(22) Date of filing: 19.02.2024
(51) Int. Cl.: H01M 4/13, H01M 10/04, H01M 10/0587

(54) **SECONDARY BATTERY**

(30) Priority: 28.02.2023 JP 2023029129
(71) Applicant: Panasonic Energy Co., Ltd., Osaka 570-8511 (JP)
(72) Inventor: MIZUKOSHI, Fumikazu, Kadoma-shi, Osaka 571-0057 (JP); MIZAWA, Atsushi, Kadoma-shi, Osaka 571-0057 (JP)
(74) Representative: Eisenführ Speiser
(86) International application number: PCT/JP2024/005701
(87) International publication number: WO 2024/181197

(57) **Abstract**

A secondary battery (10) according to an embodiment comprises an electrode body in which a positive electrode (11) and a negative electrode are wound with a separator interposed therebetween. The positive electrode (11) has a wide portion (30) and a narrow portion (40) which have different widths from each other, the narrow portion (40) being provided further toward the winding start side than the center in the lengthwise direction of the positive electrode (11).

## Description

### TECHNICAL FIELD

The present disclosure relates to a secondary battery.

### BACKGROUND ART

In a secondary battery such as a lithium-ion battery, a positive electrode and a negative electrode are arranged opposite each other so that a mixture layer of the negative electrode is always arranged opposite a mixture layer of the positive electrode through a separator to prevent metallic lithium from precipitating at the negative electrode. However, as the battery is repeatedly charged and discharged, for example, the pressure inside the battery increases due to the expansion of the negative electrode mixture layer, thereby increasing a pressure load on the positive electrode and causing the positive electrode to elongate. Conventional secondary batteries are designed so that the negative electrode is one size larger than the positive electrode in order to maintain a state where the positive and negative electrodes oppose each other even when the positive electrode is elongated by charging and discharging (refer to Patent Literature 1).

### CITATION LIST

### PATENT LITERATURE

PATENT LITERATURE 1: International Publication No. WO 2019/230297

### SUMMARY

With the increase in capacity of secondary batteries in recent years, the expansion of the negative electrode mixture layer during charging and discharging has become larger and the elongation of the positive electrode during repeated charging and discharging has become more pronounced. If the positive electrode is greatly elongated, in addition to precipitation of metallic lithium at the negative electrode, a partial short circuit may occur due to contact between the positive electrode and a negative electrode lead or the like. Although the effect of elongation of the positive electrode due to charging and discharging may be reduced by designing a smaller positive electrode size, a smaller positive electrode size reduces an amount of the positive electrode mixture layer that contributes to charging and discharging, resulting in a lower capacity of the secondary battery.

An object of the present disclosure is to provide a secondary battery that can more reliably suppress the occurrence of a short circuit and the creation of a negative electrode-unopposed region of a positive electrode even when the positive electrode is elongated by charging and discharging while retaining a capacity of the secondary battery.

A secondary battery that is an aspect of the present disclosure comprises: an electrode assembly in which a positive electrode and a negative electrode are wound around a separator, wherein the positive electrode has a wide width portion and a narrow width portion whose widths differ from each other, and the narrow width portion is provided on a beginning side of winding relative to a center of the positive electrode in a longitudinal direction.

According to the secondary battery of the present disclosure, the occurrence of a short circuit and the creation of a negative electrode-unopposed region of a positive electrode can be suppressed even when the positive electrode is elongated by charging and discharging while retaining a capacity of the secondary battery.

### BRIEF DESCRIPTION OF DRAWING

FIG. 1 is a sectional view in an axial direction of a secondary battery that is an example of an embodiment.
FIG. 2 is a diagram showing a positive electrode that is an example of an embodiment in an expanded state.
FIG. 3 is a plan view showing a winding structure on a beginning side of winding in the positive electrode that is an example of an embodiment.
FIG. 4 is a diagram showing a positive electrode that is another example of an embodiment in an expanded state.

### DESCRIPTION OF EMBODIMENTS

When a secondary battery is repeatedly charged and discharged, an expansion rate of a negative electrode mixture layer that makes up the negative electrode increases. Then, a pressure load received by a positive electrode that is arranged so as to oppose the negative electrode gradually increases, a distortion of the positive electrode eventually exceeds an elastic region and reaches a plastic region, causing the positive electrode to elongate. A study conducted by the present inventors revealed that, in a secondary battery, the elongation of the positive electrode caused by charging and discharging is more pronounced at a beginning side of winding (winding core side) than at an end side of winding (outer circumferential side) during winding. This is presumably due to the fact that when the negative electrode mixture layer expands as a result of charging and discharging, pressure is exerted to inside the battery from an outer can that houses an electrode assembly.

According to the secondary battery of the present disclosure, providing a narrow width portion in which a width of the positive electrode is designed to be smaller than other portions on the beginning side of winding relative to a center of the positive electrode in a longitudinal direction enables the creation of a negative electrode-unopposed region of the positive electrode on the beginning side of winding of the positive electrode to be suppressed even when charging and discharging is repeated. In addition, by designing only the width of the positive electrode at the beginning side of winding where elongation of the positive electrode during charging and discharging is more pronounced to be reduced rather than reducing the width of the entire positive electrode, the reduction in area of the positive electrode can be suppressed and the capacity of the secondary battery can be retained.

Hereinafter, an example of an embodiment of a secondary battery according to the present disclosure will be described in detail with reference to the drawings. The embodiment described below is merely an example and the present disclosure is not limited to the following embodiment. In addition, configurations created by selectively combining respective constituent elements of the embodiment described below are included in the scope of the present disclosure.

While a cylindrical battery in which a wound electrode assembly 14 is housed in a cylindrical bottomed outer can 16 will be exemplified as a secondary battery in the embodiment described below, an outer body of the secondary battery is not limited to a cylindrical outer can. Examples of other embodiments of the secondary battery according to the present disclosure include a rectangular battery comprising a rectangular outer can, a coin-shaped battery comprising a coin-shaped outer can, and a pouch-type battery comprising an outer body constituted of a laminate sheet including a metal layer and a resin layer.

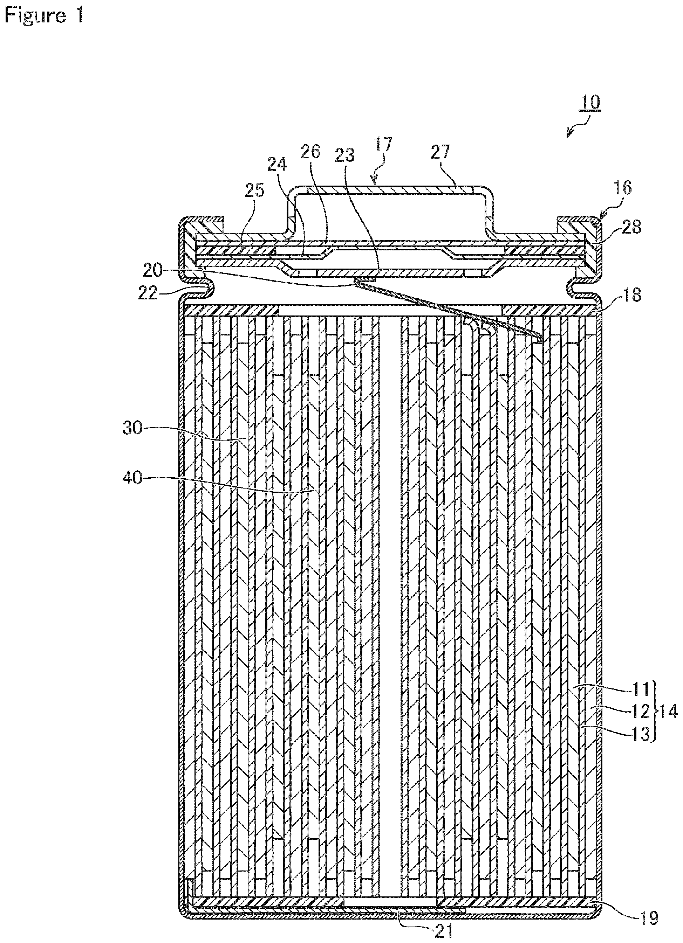

FIG. 1 is a diagram schematically showing a cross section of a secondary battery 10 that is an example of the embodiment. As shown in FIG. 1, the secondary battery 10 comprises an electrode assembly 14, a non-aqueous electrolyte (not illustrated), and an outer can 16 that houses the electrode assembly 14 and the non-aqueous electrolyte. The electrode assembly 14 has a positive electrode 11, a negative electrode 12, and a separator 13 and has a wound structure in which the positive electrode 11 and the negative electrode 12 are wound in a spiral shape around the separator 13. The outer can 16 is a cylindrical bottomed metal container with one side in an axial direction opened, and the opening of the outer can 16 is sealed by a sealing assembly 17. Note that in FIG. 1, the number of winding turns shown is less than in reality in order to make an arrangement relationship among the positive electrode 11, the negative electrode 12, and the separator 13 in the electrode assembly 14 easier to understand. Hereinafter, a side of the sealing assembly 17 in the axial direction (height direction) of the secondary battery 10 will be referred to as "up or above" and a side of a bottom portion of the outer can 16 in the axial direction will be referred to as "down or below".

The non-aqueous electrolyte has lithium-ion conductivity. The non-aqueous electrolyte may be a liquid electrolyte (electrolytic solution) or a solid electrolyte.

The liquid electrolyte (electrolytic solution) contains a non-aqueous solvent and an electrolyte salt dissolved in the non-aqueous solvent. As the non-aqueous solvent, for example, esters, ethers, nitriles, amides, and mixtures of two or more of these substances are used. Examples of the non-aqueous solvent include ethylene carbonate (EC), ethyl methyl carbonate (EMC), dimethyl carbonate (DMC), diethyl carbonate (DEC), and a mixture of these solvents. The non-aqueous solvent may contain halogen substitutes (for example, fluoroethylene carbonate) in which at least some of the hydrogen of the solvents is replaced with halogen atoms such as fluorine. For example, lithium salts such as LiPF₆ are used as the electrolyte salts.

As the solid electrolyte, for example, a solid or gel polymer electrolyte, an inorganic solid electrolyte, and the like can be used. As the inorganic solid electrolyte, known materials used in all-solid-state lithium-ion secondary batteries and the like (for example, oxide-based solid electrolytes, sulfide-based solid electrolytes, and halogen-based solid electrolytes) can be used. A polymer electrolyte contains, for example, a lithium salt and a matrix polymer or a non-aqueous solvent, a lithium salt, and a matrix polymer. As the matrix polymer, for example, a polymer material that absorbs a non-aqueous solvent and becomes a gel is used. Examples of polymer materials include fluorine resins, acrylic resins, and polyether resins.

The positive electrode 11, the negative electrode 12, and the separator 13 which constitute the electrode assembly 14 are all long, strip-like bodies which are wound in a spiral shape and stacked alternately in a radial direction of the electrode assembly 14. The negative electrode 12 is formed slightly larger than the positive electrode 11 in order to prevent lithium precipitation. In other words, the negative electrode 12 is formed longer than the positive electrode 11 in a longitudinal direction and a width direction (transverse direction). The separator 13 is formed slightly larger than at least the positive electrode 11, and two separators 13 are arranged so as to sandwich the positive electrode 11. The secondary battery 10 comprises insulating plates 18, 19 arranged above and below the electrode assembly 14, respectively.

The positive electrode 11 includes a positive electrode core and a positive electrode mixture layer formed on the positive electrode core. As the positive electrode core, a foil of a metal that is stable in a potential range of the positive electrode 11 such as aluminum or an aluminum alloy and a film with the metal arranged on a surface layer can be used. The positive electrode mixture layer includes a positive electrode active material, a conductive agent, and a binding agent. For example, the positive electrode 11 can be fabricated by coating the positive electrode core with a positive electrode mixture slurry containing the positive electrode active material, the conductive agent, the binding agent, and the like, letting the coating film dry, and then compressing the positive electrode 11 to form the positive electrode mixture layer on both surfaces of the positive electrode core.

The positive electrode mixture layer contains a granulated lithium metal composite oxide as the positive electrode active material. A lithium metal composite oxide is a composite oxide containing metal elements such as Co, Mn, Ni, and Al in addition to Li. The metal element comprising the lithium metal composite oxide is at least one selected from the group consisting of, for example, Mg, Al, Ca, Sc, Ti, V, Cr, Mn, Fe, Co, Ni, Cu, Zn, Ga, Ge, Y, Zr, Sn, Sb, W, Pb, and Bi. Among these metal elements, at least one selected from the group consisting of Co, Ni, Al and Mn is preferable. Examples of suitable composite oxides include a lithium metal composite oxide containing Ni, Co, and Mn and a lithium metal composite oxide containing Ni, Co, and Al.

Examples of the conductive agent included in the positive electrode mixture layer include carbon black such as acetylene black and Ketjen black, graphite, carbon nanotubes (CNT), carbon nanofibers, graphene, and other carbon materials. Examples of the binding agent included in the positive electrode mixture layer include fluorinated resins such as polytetrafluoroethylene (PTFE) and polyvinylidene fluoride (PVDF), polyacrylonitrile (PAN), polyimide, acrylic resins, and polyolefin. In addition, these resins may be used in combination with carboxymethyl cellulose (CMC) or its salts, polyethylene oxide (PEO), and the like.

The negative electrode 12 includes a negative electrode core and a negative electrode mixture layer formed on the negative electrode core. As the negative electrode core, a foil of a metal that is stable in a potential range of the negative electrode 12 such as copper or a copper alloy or a film with the metal arranged on a surface layer can be used. The negative electrode mixture layer includes a negative electrode active material, a binding agent, and, if necessary, a conductive agent. The negative electrode 12 can be fabricated by coating a surface of the negative electrode core with a negative electrode mixture slurry containing the negative electrode active material, the binding agent, and the like, letting the coating film dry, and then compressing the negative electrode core to form the negative electrode mixture layer on both surfaces of the negative electrode core.

The negative electrode mixture layer preferably contains a carbon material and a silicon-containing material as the negative electrode active material. The combined use of the carbon material and the silicon-containing material facilitates both high capacity and excellent cycle characteristics. For example, as the negative electrode active material, a material containing at least one of an element such as Sn that alloys with Li and a material containing the element may be used in the negative electrode mixture layer.

From the viewpoint of high capacity, a content of the silicon-containing material is preferably greater than or equal to 3% by mass of the total mass of the negative electrode active material, more preferably greater than or equal to 5% by mass, and even more preferably greater than or equal to 8% by mass. In general, since silicon-containing materials have a higher rate of expansion during charging and discharging than carbon materials, elongation of the positive electrode in the width direction becomes more pronounced when charging and discharging is repeated. Although details will be provided later, in the present embodiment, a narrow width portion 40 in which the width of the positive electrode 11 is smaller than in other portions is formed on the beginning side of winding of the positive electrode 11. Therefore, even when charging and discharging is repeated, the occurrence of a short circuit and the creation of a negative electrode-unopposed region of the positive electrode due to the elongation of the positive electrode 11 can be suppressed. In other words, the effect of the present disclosure becomes more pronounced when containing a silicon-containing material as the negative electrode active material.

A carbon material that serves as the negative electrode active material is, for example, at least one selected from the group consisting of natural graphite, artificial graphite, soft carbon, and hard carbon. Among these materials, as the carbon material, at least an artificial graphite such as massive artificial graphite (MAG) and graphitized mesophase carbon microbeads (MCMB), a natural graphite such as scale-like graphite, lump graphite, and earthy graphite, or a mixture of these materials are preferably used. A volume-based D50 of the carbon material is, for example, greater than or equal to 1 µm and less than or equal to 30 µm, and preferably greater than or equal to 5 µm and less than or equal to 25 µm.

The silicon-containing material may be any material that contains Si, and examples include silicon alloys, silicon compounds, and Si-containing composite materials. Among these materials, Si-containing composite materials are preferable. The D50 of composite materials is generally smaller than the D50 of graphite. A volume-based D50 of the composite material is, for example, greater than or equal to 1 µm and less than or equal to 15 µm. Note that one of these materials may be used independently or two or more of these materials may be used in combination as the silicon-containing material.

A suitable silicon-containing material (composite material) is composite particles containing an ion-conducting phase, a Si phase dispersed in the ion-conducting phase, and a conductive layer covering the surface of the ion-conducting phase. The ion-conducting phase is, for example, at least one selected from the group consisting of a silicate phase, an amorphous carbon phase, a silicide phase, and a silicon oxide phase. The Si phase is formed by Si dispersed in the form of fine particles. The ion-conducting phase is a continuous phase comprising a finer set of particles than the Si phase. The conductive layer comprises a material with higher conductivity than the ion-conducting phase and forms a favorable conductive path in the negative electrode mixture layer.

An example of a suitable composite material containing Si is composite particles that have a sea-island structure with fine Si dispersed approximately uniformly in an amorphous silicon oxide phase and is represented as a whole by the general formula SiOₓ (0 < x ≤ 2). A main component of silicon oxide may be silicon dioxide. A content ratio (x) of oxygen to Si is, for example, 0.5 ≤ x < 2.0, and preferably 0.8 ≤ x ≤ 1.5.

In a similar manner to the positive electrode mixture layer, although fluorine-containing resin, PAN, polyimide, acrylic resin, polyolefin, and the like can be used for the binding agent included in the negative electrode mixture layer, styrene butadiene rubber (SBR) is preferably used. In addition, the negative electrode mixture layer preferably contains CMC or its salts, polyacrylic acid (PAA) or its salts, polyvinyl alcohol (PVA), or the like. In particular, suitably, SBR is used in combination with CMC or its salts, PAA or its salts, or the like. The negative electrode mixture layer may include a conductive agent such as CNT.

A porous sheet with ion permeability and insulation properties is used as the separator 13. Specific examples of the porous sheet include microporous thin films, woven fabrics, and non-woven fabrics. Polyolefins such as polyethylene and polypropylene, and cellulose are preferable materials for the separator 13. The separator 13 may have a single-layer structure or a multi-layer structure. In addition, a highly heat-resistant resin layer such as aramid resin may be formed on a surface of the separator 13. A filler layer including an inorganic filler may be formed at an interface between the separator 13 and at least one of the positive electrode 11 and the negative electrode 12.

A positive electrode lead 20 is connected to the positive electrode 11 and a negative electrode lead 21 is connected to a winding end-side of the negative electrode 12. The positive electrode lead 20 extends through a through-hole in the insulating plate 18 to the sealing assembly 17, and the negative electrode lead 21 extends to the bottom portion of the outer can 16. The positive electrode lead 20 is connected to a lower surface of an internal terminal plate 23 of the sealing assembly 17 by welding or the like. A cap 27 constituting a top plate of the sealing assembly 17 is electrically connected to the internal terminal plate 23 to make the cap 27 a positive electrode terminal. In addition, the negative electrode lead 21 is connected to an inner surface of the bottom portion of the metallic outer can 16 by welding or the like to make the outer can 16 a negative electrode terminal.

As described above, the outer can 16 is a cylindrical bottomed metal container with one side in the axial direction opened. A gasket 28 is provided between the outer can 16 and the sealing assembly 17 to ensure sealability of the interior of the battery and insulation properties between the outer can 16 and the sealing assembly 17. A grooved portion 22 which is a part of the side surface portion projecting inward and which supports the sealing assembly 17 is formed in the outer can 16. The grooved portion 22 is preferably formed in an annular shape along a circumferential direction of the outer can 16 and supports the sealing assembly 17 with an upper surface thereof. The sealing assembly 17 is fixed to an upper part of the outer can 16 by the grooved portion 22 and an opening end portion of the outer can 16 which is crimped with respect to the sealing assembly 17.

For example, an outer diameter of the outer can 16 is greater than or equal to 20 mm and less than or equal to 50 mm. Increasing the outer diameter of the outer can 16 increases a volume of the electrode assembly 14 that can be housed inside the outer can 16 and enables a capacity of the secondary battery 10 to be increased. However, when the outer diameter of the outer can 16 is increased and the volume of the electrode assembly 14 to be housed inside the outer can 16 is increased, a pressure load on the positive electrode 11 increases. In the present embodiment, the narrow width portion 40 in which the width of the positive electrode 11 is smaller than in other portions is formed on the beginning side of winding of the positive electrode 11. Therefore, even when the volume of the electrode assembly 14 is large, the occurrence of a short circuit and the creation of a negative electrode-unopposed region of the positive electrode due to the elongation of the positive electrode 11 caused by charging and discharging can be suppressed. In other words, when the outer diameter of the outer can 16 is increased and the volume of the electrode assembly 14 to be housed inside the outer can 16 is increased, the effect of the present disclosure becomes more pronounced. Therefore, an example of a suitable range of the outer diameter of the outer can 16 is greater than or equal to 25 mm and less than or equal to 50 mm, more preferably greater than or equal to 30 mm and less than or equal to 50 mm, and even more preferably greater than or equal to 35 mm and less than or equal to 50 mm.

The sealing assembly 17 has a structure in which the internal terminal plate 23, a lower vent member 24, an insulating member 25, an upper vent member 26, and the cap 27 are stacked in order from a side of the electrode assembly 14. Each member constituting the sealing assembly 17 has, for example, a disk shape or a ring shape and the respective members excluding the insulating member 25 are electrically connected to each other. The lower vent member 24 and the upper vent member 26 are connected to each other at respective centers thereof and the insulating member 25 is interposed between respective peripheral portions thereof. When an abnormality occurs in the secondary battery 10 and internal pressure rises, due to the lower vent member 24 deforming and breaking so as to push the upper vent member 26 upward to the side of the cap 27, a current path between the lower vent member 24 and the upper vent member 26 is interrupted. As the internal pressure rises further, the upper vent member 26 ruptures and gas is discharged through an opening portion of the cap 27.

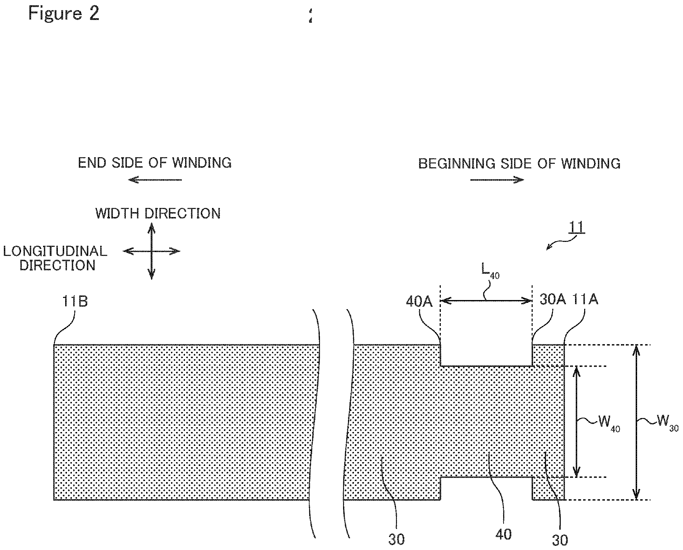

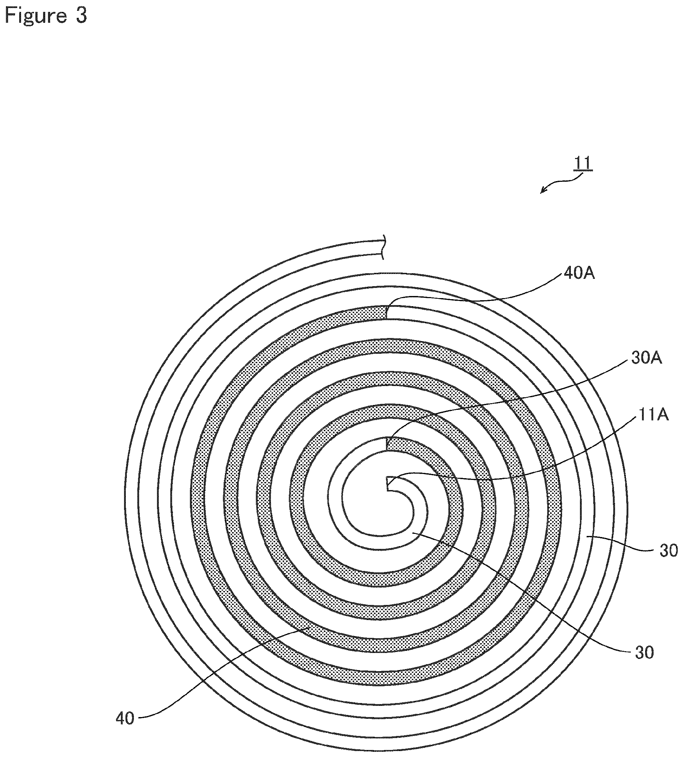

Hereinafter, the positive electrode 11 will be described in detail with reference to FIGS. 2 and 3.

FIG. 2 is an example of a front view showing, in an expanded state, the positive electrode 11 that constitutes the electrode assembly 14 provided in the secondary battery 10 shown in FIG. 1. FIG. 3 is a plan view schematically showing a winding structure on a beginning side of winding in the positive electrode 11. Note that in FIG. 2, a width of the narrow width portion 40 to be described later is exaggerated in order to clarify the drawing. In addition, in FIG. 3, a region where the narrow width portion 40 is formed is indicated by hatching.

As shown in FIG. 2, the positive electrode 11 has the wide width portion 30 and the narrow width portion 40 with widths that differ from each other. In this case, the wide width portion 30 refers to a region in the positive electrode 11 with a same width as the width of the positive electrode 11 at an end end of winding 11B of the positive electrode 11 or a larger width than the width of the positive electrode 11 at the end end of winding 11B of the positive electrode 11. In addition, the narrow width portion 40 refers to a region in the positive electrode 11 with a smaller width than the width of the positive electrode 11 at the end end of winding 11B of the positive electrode 11. Note that in the present specification, a beginning end of winding 11A of the positive electrode 11 refers to an end in the longitudinal direction of the positive electrode 11 that is positioned on a beginning side of winding (winding core side) of the electrode assembly 14. In addition, the end end of winding 11B of the positive electrode 11 refers to an end in the longitudinal direction of the positive electrode 11 that is positioned on an end side of winding (outer circumferential side) of the electrode assembly 14.

As shown in FIG. 2, the narrow width portion 40 is provided on a beginning side of winding relative to the center of the positive electrode 11 in the longitudinal direction. As described above, a pressure load on the positive electrode 11 when charging and discharging of the secondary battery 10 is repeated is larger on the beginning side of winding than on the end side of winding. In other words, an effect of elongation of the positive electrode 11 when charging and discharging are repeated is more pronounced on the beginning side of winding than on the end side of winding. Therefore, by providing the narrow width portion 40 on the beginning side of winding of the positive electrode 11, even when an elongation of the positive electrode 11 occurs on the beginning side of winding of the positive electrode 11, the occurrence of a short circuit and the creation of a negative electrode-unopposed region of the positive electrode caused by the elongation of the positive electrode 11 can be suppressed. In addition, by not providing the narrow width portion 40 but providing the wide width portion 30 on the end side of winding of the positive electrode 11 where the effect of elongation of the positive electrode 11 is relatively small, an area of the positive electrode 11 can be secured. As a result, a decline in the capacity of the secondary battery 10 can be suppressed.

In the present embodiment, the narrow width portion 40 is only provided on the beginning side of winding relative to the center of the positive electrode 11 in the longitudinal direction and is not provided on the end side of winding relative to the center of the positive electrode 11 in the longitudinal direction. Accordingly, the area of the positive electrode 11 can be secured and a decline in the capacity of the secondary battery 10 can be suppressed. In addition, with the exception of a portion to which the positive electrode lead 20 (refer to FIG. 1) is to be bonded, the positive electrode mixture layer is formed over the entire wide width portion 30 and the entire narrow width portion 40.

As shown in FIG. 2, a width W₄₀ of the narrow width portion 40 is preferably less than or equal to 99% of a width W₃₀ of the wide width portion 30, more preferably less than or equal to 98%, and even more preferably less than or equal to 97%. In this case, the occurrence of a short circuit and the creation of a negative electrode-unopposed region of the positive electrode caused by the elongation of the positive electrode 11 can be suppressed. In addition, the width W₄₀ of the narrow width portion 40 is preferably greater than or equal to 92% of the width W₃₀ of the wide width portion 30, more preferably greater than or equal to 93%, and even more preferably greater than or equal to 94%. In this case, the area of the positive electrode 11 can be secured and a decline in the capacity of the secondary battery 10 can be suppressed. Therefore, an example of a suitable range of the width W₄₀ of the narrow width portion 40 is greater than or equal to 92% and less than or equal to 99% of the width W₃₀ of the wide width portion 30, more preferably greater than or equal to 93% and less than or equal to 98%, and even more preferably greater than or equal to 94% and less than or equal to 97%.

Note that in the present embodiment, the width W₃₀ of the wide width portion 30 and the width W₄₀ of the narrow width portion 40 are uniform along the longitudinal direction of the positive electrode 11. Therefore, the width W₃₀ of the wide width portion 30 and the width of the positive electrode 11 at the end end of winding 11B of the positive electrode 11 are the same. In addition, the narrow width portion 40 has a shape that is smaller in width by an approximately equal length from both ends of the wide width portion 30 in the width direction.

As shown in FIG. 2, a length L₄₀ of the narrow width portion 40 is preferably less than or equal to 30% of a length of the positive electrode 11, more preferably less than or equal to 20%, and even more preferably less than or equal to 10%. In this case, since a proportion of the wide width portion 30 in the positive electrode 11 increases, the area of the positive electrode 11 can be secured and a decline in the capacity of the secondary battery 10 can be suppressed. A lower limit of the length L₄₀ of the narrow width portion 40 is, for example, 1% of the length of the positive electrode 11.

As shown in FIGS. 2 and 3, when the number of winding turns of the positive electrode is denoted by n, the narrow width portion 40 is preferably provided within a range from a second turn to a (n × 1/3)-th turn on the beginning side of winding of the positive electrode 11. In other words, the wide width portion 30 is wound continuously from the beginning end of winding 11A toward the end side of winding of the positive electrode 11 by greater than or equal to 1 turn and less than or equal to 2 turns. In addition, the narrow width portion 40 is provided within a range from a terminal 30A of the wide width portion 30 provided on the beginning side of winding to the (n × 1/3)-th turn. Furthermore, the wide width portion 30 is provided continuously from a terminal 40A of the narrow width portion 40 toward the end side of winding. While the number of winding turns n of the positive electrode 11 is not particularly limited, for example, the number of winding turns n ranges from 20 to 40. When the number of winding turns n is 30, a 30th turn is an outermost circumference of the positive electrode 11.

As described above, a pressure load on the positive electrode 11 when charging and discharging of the secondary battery 10 is repeated is larger on the beginning side of winding than on the end side of winding. However, a study conducted by the present inventors revealed that, in a range from the beginning end of winding 11A of the positive electrode 11 to the first turn, the elongation of the positive electrode 11 in the width direction due to charging and discharging is small. This is presumably because when pressure is applied to the positive electrode 11 by charging and discharging, the positive electrode 11 tends to elongate in the longitudinal direction and less in the width direction in the range from the beginning end of winding 11A to the first turn. On the other hand, after the second turn from the beginning end of winding 11A, when pressure is applied to the positive electrode 11 by charging and discharging, it is presumed that the positive electrode 11 elongates in the width direction with no room for elongation in the longitudinal direction. Therefore, providing the wide width portion 30 in the first turn of the positive electrode 11 where elongation in the width direction of the positive electrode 11 is small enables the area of the positive electrode 11 to be secured and a decline in the capacity of the secondary battery 10 to be suppressed.

In addition, a study conducted by the present inventors revealed that a pressure load on the positive electrode 11 when repeating charging and discharging of the secondary battery 10 is greatest in a range from the second turn to the fifth turn on the beginning side of winding of the positive electrode 11. Therefore, the narrow width portion 40 is more preferably provided within a range from the second turn to the fifth turn on the beginning side of winding of the positive electrode 11.

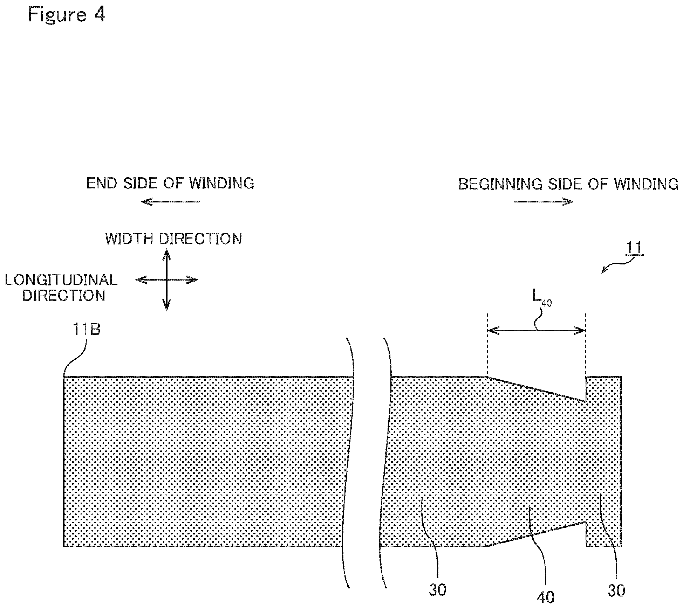

While the width W₄₀ of the narrow width portion 40 is uniform along the longitudinal direction of the positive electrode 11 in the present embodiment, the width W₄₀ is not limited thereto. For example, as shown in FIG. 4, the width W₄₀ of the narrow width portion 40 may differ in the longitudinal direction of the positive electrode 11. As described above, a pressure load on the positive electrode 11 when charging and discharging of the secondary battery 10 is repeated is larger on the beginning side of winding than on the end side of winding. Therefore, as shown in FIG. 4, by making the width W₄₀ of the narrow width portion 40 smaller toward the beginning side of winding of the positive electrode 11, an effect of the elongation in the width direction of the positive electrode 11 can be reduced while securing an area of the positive electrode 11.

In addition, while a coating amount of the positive electrode mixture layer that is applied to the wide width portion 30 and a coating amount of the positive electrode mixture layer that is applied to the narrow width portion 40 are the same in the present embodiment, the coating amounts are not limited thereto. For example, the coating amount of the positive electrode mixture layer that is applied to the narrow width portion 40 may be made smaller than the coating amount of the positive electrode mixture layer that is applied to the wide width portion 30.

Note that the narrow width portion 40 can be fabricated by, for example, fabricating the positive electrode 11 having a uniform width across the longitudinal direction and then cutting the positive electrode 11 into a desired shape by laser cutting or cutting means such as a utility knife.

### EXAMPLES

While the present disclosure will be described below in greater detail by citing examples, it is to be understood that the present disclosure is not limited to the following examples.

### <Example 1>

### [Fabrication of Positive Electrode]

As a positive electrode active material, aluminum-containing nickel lithium cobaltate (LiNi_{0.88}Co_{0.09}Al_{0.03}O₂) was used. 100 parts by mass of LiNi_{0.88}Co_{0.09}Al_{0.03}O₂, 1.0 parts by mass of acetylene black, and 0.9 parts by mass of polyvinylidene fluoride (PVDF) were mixed in an N-methylpyrrolidone (NMP) dispersant to prepare a positive electrode mixture slurry. The prepared positive electrode mixture slurry was uniformly applied to both surfaces of a positive electrode core made of 15 µm-thick aluminum foil. Next, after removing NMP in the coating film at a temperature of 100 to 150°C in a dryer, the coating film was compressed by a roll press machine to fabricate a positive electrode in which positive electrode mixture layers were formed on both surfaces of the positive electrode core. Note that the width of the positive electrode is 63.4 mm and is uniform along the entire length of the positive electrode.

Subsequently, the narrow width portion was fabricated using a utility knife in a region positioned at a second turn to a seventh turn of the electrode assembly when winding the positive electrode. At this point, the positive electrode was cut so that the width of the narrow width portion was equal to the width of the end end of winding of the positive electrode or, in other words, 96.5% of the width of the wide width portion.

### [Fabrication of Negative Electrode]

Graphite powder was mixed to 90 parts by mass and Si oxide to 10 parts by mass. 100 parts by mass of a negative electrode active material, 1 part by mass of CMC as a thickener, and 1 part by pass of styrene-butadiene rubber as a binding agent were mixed in water to prepare a negative electrode mixture slurry. The negative electrode mixture slurry was applied to both surfaces of a negative electrode core of 8 µm-thick copper foil to form a negative electrode mixture layer. Next, after drying, the negative electrode mixture layer was compressed by a compression roller down to a negative electrode thickness of 0.160 mm to fabricate a negative electrode. Note that the width of the negative electrode is 64.0 mm and is uniform along the longitudinal direction of the negative electrode.

### [Preparation of Non-Aqueous Electrolyte]

LiPF₆ was dissolved at a concentration of 1.2 moles/liter in a mixed solvent prepared by mixing ethylene carbonate (EC), ethyl methyl carbonate (EMC), and dimethyl carbonate (DMC) in a 3:3:4 volume ratio (25°C) to prepare a non-aqueous electrolyte.

An aluminum lead was attached to a part of the positive electrode, a nickel lead was attached to the end side of winding of the negative electrode, and the positive electrode and the negative electrode were spirally wound via a polyolefin separator to fabricate a wound electrode assembly. Insulating plates were respectively arranged above and below the electrode assembly and the electrode assembly was housed inside an outer can. A negative electrode lead was welded to a bottom portion of the outer can with a bottomed cylindrical shape and a positive electrode lead was welded to a sealing assembly. An electrolytic solution was injected into the outer can and an opening of the outer can was sealed by the sealing assembly via a gasket to fabricate a cylindrical battery.

### <Example 2>

In the fabrication of a positive electrode, the narrow width portion was fabricated using a utility knife in a region positioned at a second turn to a sixth turn when winding the positive electrode. At this point, the positive electrode was cut so that the width of the narrow width portion was equal to the width of the end end of winding of the positive electrode or, in other words, 96.5% of the width of the wide width portion. Otherwise, a configuration of Example 2 is similar to the configuration of Example 1.

### <Example 3>

In the fabrication of a positive electrode, the narrow width portion was fabricated using a utility knife in a region positioned at a second turn to a fifth turn when winding the positive electrode. At this point, the positive electrode was cut so that the width of the narrow width portion was equal to the width of the end end of winding of the positive electrode or, in other words, 96.5% of the width of the wide width portion. Otherwise, a configuration of Example 3 is similar to the configuration of Example 1.

### <Example 4>

In the fabrication of a positive electrode, the positive electrode with a width of 63.6 mm was fabricated and the narrow width portion was fabricated using a utility knife in a region positioned at a second turn to a sixth turn when winding the positive electrode. At this point, the positive electrode was cut so that the width of the narrow width portion was equal to the width of the end end of winding of the positive electrode or, in other words, 96.5% of the width of the wide width portion. Otherwise, a configuration of Example 4 is similar to the configuration of Example 1.

### <Example 5>

In the fabrication of a positive electrode, the positive electrode with a width of 63.6 mm was fabricated and the narrow width portion was fabricated using a utility knife in a region positioned at a second turn to a fifth turn when winding the positive electrode. At this point, the positive electrode was cut so that the width of the narrow width portion was equal to the width of the end end of winding of the positive electrode or, in other words, 96.2% of the width of the wide width portion. Otherwise, a configuration of Example 5 is similar to the configuration of Example 1.

### <Comparative Example 1>

In the fabrication of a positive electrode, the positive electrode was fabricated in a similar manner to Example 1 with the exception of fabricating the positive electrode with a width of 63.0 mm and not forming a narrow width portion in the positive electrode.

### <Comparative Example 2>

In the fabrication of a positive electrode, the positive electrode was fabricated in a similar manner to Example 1 with the exception of fabricating the positive electrode with a width of 62.0 mm and not forming a narrow width portion in the positive electrode.

### <Comparative Example 3>

In the fabrication of a positive electrode, the positive electrode was fabricated in a similar manner to Example 1 with the exception of fabricating the positive electrode with a width of 61.2 mm and not forming a narrow width portion in the positive electrode.

### [Evaluation of Initial Discharge Capacity]

Under an environmental temperature of 25°C, the test cells described above were charged at a constant current of 0.2 It to 4.2 V and then charged at a constant voltage of 4.2 V to 0.02 It. Subsequently, discharge capacity was evaluated after discharge at a constant current of 0.2 It to 2.5 V.

### [Evaluation of Elongation of Positive Electrode]

At a 100-th cycle of the charging and discharging described above, X-ray CT photography of each battery was performed using inspXio SMX-255CT FPD HR manufactured by Shimadzu. The presence or absence of the creation of a negative electrode-unopposed region of a positive electrode was confirmed from the X-ray CT image of each battery.

An initial capacity and the presence or absence of the creation of a negative electrode-unopposed region of a positive electrode after 100 cycles of batteries according to the examples and the comparative examples are shown in Table 1. Note that the initial capacity in Table 1 is a relative value when the battery according to Comparative Example 1 is set to 100, where the larger the value, the more superior the initial capacity.

**[Table 1]**

| | Positive electrode | | | | Negative electrode | Evaluation result | |
|---|---|---|---|---|---|---|---|
| | Width of positive electrode (wide width portion) [mm] | Width of narrow width portion [mm] | Width of narrow width portion/width of wide width portion [%] | Formation position of narrow width portion during winding | Width of negative electrode **[mm]** | Initial capacity (relative value) | Presence/absence of creation of unopposed region |
| Example 1 | 63.4 | 62.3 | 96.5 | 2 to 7 turns | 64.0 | 99.9 | Absent |
| Example 2 | 63.4 | 62.3 | 96.5 | 2 to 6 turns | 64.0 | 100.0 | Absent |
| Example 3 | 63.4 | 62.3 | 96.5 | 2 to 5 turns | 64.0 | 100.2 | Absent |
| Example 4 | 63.6 | 62.4 | 96.2 | 2 to 6 huns | 64.0 | 100.3 | Absent |
| Example 5 | 63.6 | 62.4 | 96.2 | 2 to 5 turns | 64.0 | 100.5 | Absent |
| Comparative example 1 | 63.0 | - | - | - | 64.0 | 100.0 | Present |
| Comparative example 2 | 62.0 | - | - | - | 64.0 | 98.4 | Present |
| Comparative example 3 | 61.2 | - | - | - | 64.0 | 97.1 | Absent |

As shown in Table 1, in all of the batteries according to the examples, the creation of a negative electrode-unopposed region of a positive electrode caused by charging and discharging is suppressed while retaining initial capacity. This is presumably because the narrow width portion is provided only on the beginning side of winding of the positive electrode, in advance taking into account the elongation of the positive electrode due to charging and discharging. In addition, in the battery according to Comparative Example 3 in which the width of the entire positive electrode has been reduced in advance in consideration of the elongation of the positive electrode due to charging and discharging, while the creation of a negative electrode-unopposed region of a positive electrode caused by charging and discharging is suppressed, the initial capacity has declined significantly with a decrease in the area of the positive electrode. In other words, with a battery in which the width of the entire positive electrode has been reduced, it is difficult to satisfy both the initial capacity of the battery and the suppression of the creation of a negative electrode-unopposed region of a positive electrode caused by charging and discharging.

In addition, the batteries according to Examples 3 and 5 in which the narrow width portion is provided in a region positioned from second to fifth turns when the positive electrode is wound have increased initial capacities as compared to the batteries according to Example 1 in which the narrow width portion is provided in a region positioned from second to seventh turns when the positive electrode is wound and the batteries according to Examples 2 and 4 in which the narrow width portion is provided in a region positioned from second to sixth turns when the positive electrode is wound. This is because the area of the positive electrode has increased by reducing the region where the narrow width portion is formed.

The present disclosure is further illustrated by the following embodiments.

Configuration 1: A secondary battery, comprising: an electrode assembly in which a positive electrode and a negative electrode are wound around a separator, wherein the positive electrode has a wide width portion and a narrow width portion whose widths differ from each other, and the narrow width portion is provided on a beginning side of winding relative to a center of the positive electrode in a longitudinal direction.

Configuration 2: The secondary battery according to Configuration 1, wherein when the number of winding turns of the positive electrode is denoted by n, the narrow width portion is provided within a range from a second turn to a (n × 1/3)-th turn on the beginning side of winding of the positive electrode.

Configuration 3: The secondary battery according to Configuration 1 or 2, wherein the narrow width portion is provided within a range from a second turn to a fifth turn on the beginning side of winding of the positive electrode.

Configuration 4: The secondary battery according to any one of Configurations 1 to 3, wherein a width of the narrow width portion is greater than or equal to 92% and less than or equal to 99% of a width of the wide width portion.

Configuration 5: The secondary battery according to any one of Configurations 1 to 4, wherein the negative electrode includes a negative electrode core and a negative electrode mixture layer formed on the negative electrode core, and the negative electrode mixture layer includes a silicon-containing material as a negative electrode active material.

Configuration 6: The secondary battery according to Configuration 5, wherein a content of the silicon-containing material is greater than or equal to 3 mass% with respect to a total mass of the negative electrode active material.

### REFERENCE SIGNS LIST

10 Secondary battery (cylindrical battery), 11 Positive electrode, 11A Beginning end of winding, 11B End end of winding, 12 Negative electrode, 13 Separator, 14 Electrode assembly, 16 Outer can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Wide width portion, 30A, 40A Terminal, 40 Narrow width portion

## Claims

1. A secondary battery, comprising:
an electrode assembly in which a positive electrode and a negative electrode are wound around a separator, wherein
the positive electrode has a wide width portion and a narrow width portion whose widths differ from each other, and
the narrow width portion is provided on a beginning side of winding relative to a center of the positive electrode in a longitudinal direction.

2. The secondary battery according to claim 1, wherein
when the number of winding turns of the positive electrode is denoted by n,
the narrow width portion is provided within a range from a second turn to a (n × 1/3)-th turn on the beginning side of winding of the positive electrode.

3. The secondary battery according to claim 1, wherein the narrow width portion is provided within a range from a second turn to a fifth turn on the beginning side of winding of the positive electrode.

4. The secondary battery according to claim 1, wherein a width of the narrow width portion is greater than or equal to 92% and less than or equal to 99% of a width of the wide width portion.

5. The secondary battery according to claim 1, wherein
the negative electrode includes a negative electrode core and a negative electrode mixture layer formed on the negative electrode core, and
the negative electrode mixture layer includes a silicon-containing material as a negative electrode active material.

6. The secondary battery according to claim 5, wherein a content of the silicon-containing material is greater than or equal to 3 mass% with respect to a total mass of the negative electrode active material.
